(19) Europäisches Patentamt
European Patent Office
Office européen des brevets

(11) **EP 3 093 793 A1**

(12) **EUROPEAN PATENT APPLICATION**
published in accordance with Art. 153(4) EPC

(43) Date of publication:
**16.11.2016 Bulletin 2016/46**

(21) Application number: **14832457.7**

(22) Date of filing: **30.07.2014**

(51) Int Cl.:
**G06K 9/00** (2006.01)

(86) International application number:
**PCT/ES2014/000131**

(87) International publication number:
**WO 2015/015022 (05.02.2015 Gazette 2015/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2013 ES 201300721**

(71) Applicants:
• **Universidad de Sevilla**
  **41013 Sevilla (ES)**
• **Consejo Superior De Investigaciones Científicas**
  **28006 Madrid (ES)**

(72) Inventors:
• **ARJONA LÓPEZ, Mª Rosario**
  **E-41012 Sevilla (ES)**
• **BATURONE CASTILLO, Mª Iluminada**
  **E-41012 Sevilla (ES)**

(74) Representative: **Pons**
**Glorieta Ruben Dario 4**
**28010 Madrid (ES)**

(54) **FINGERPRINT IDENTIFICATION METHOD AND DEVICE USING SAME**

(57) A description is given of a method and a device allowing the generation of a feature vector of a human fingerprint by means of a series of processes performed on the basis of the image of said fingerprint. These vectors are used to produce a classification, indexing or determination of fingerprint identity and also to protect secrets or to generate cryptographic keys based on fingerprints. The majority of identification methods use feature vectors and techniques for extraction and comparison purposes, which are unsuitable for electronic devices with reduced computing and storage resources. The method proposed in this invention is indeed appropriate, offering good levels of performance in terms of vector extraction times, pairing and ordering times, and memory requirements. The main uses of the invention arise in small automatic fingerprint identification systems that are portable, inexpensive and/or secure, where the user is present and wishes to be identified.

FIG. 4

**Description**

**OBJECT OF THE INVENTION**

The present invention relates to the field of biometric identification systems and methods.

The object of the invention is a method and a device that can generate a feature vector of a human fingerprint through a series of processes performed based on the fingerprint image. These vectors permit the classification, indexing or determination of identity of fingerprints (and therefore of individuals), as well as the protection of secrets or generation of cryptographic keys from fingerprints.

**BACKGROUND OF THE INVENTION**

The use of fingerprints as a biometric feature is widely used in applications for identifying individuals, access control, etc., due to their high discrimination and because users readily accept entering their fingerprint into a capture device (easy use as it is a non-intrusive technique). It is one of the biometric features most successfully applied in forensic and police activity and, more recently, in access control systems. Automatic Fingerprint Identification Systems (AFIS) need to compare an input fingerprint with the fingerprints stored in the system database. In these applications, individuals are previously registered in a database based on the characteristics of their fingerprints. Subsequently, when an individual needs to be identified, the fingerprint characteristics are reextracted and compared with the characteristics stored in the fingerprint database.

It is currently a challenge to ensure the efficient implementation of identification systems using databases with a large number of fingerprints and to provide immediate response times and accurate identification. The time required for identifying an individual *(tidentification)* can be expressed as:

$$tidentification = textraction + tmatching*N + tdecision$$

wherein *textraction* is the time invested in fingerprint characteristic extraction, *tmatching* is the time used to compare the characteristics extracted from the input fingerprint with each of the N characteristics stored in the database, and *tdecision* is the time taken to decide which of the N registered individuals is the candidate chosen as the owner of the input fingerprint, in the case of an identification application, or the time taken to generate a reduced list of M candidate individuals (M being much smaller than N), in the case of an indexing application.

The *textraction* value is much higher than the *tmatching* value because the feature extraction process is far more complex than the matching process. For example, the extraction algorithm MINDTCT developed by NIST ("National Institute of Standards and Technology") is a slower order of magnitude in a single PC platform with an Intel Core i7 processor than the matching algorithm BOZORTH98 NIST (for example, more than 200 ms average for the former and less than 20 ms for the second) [NBIS]. However, although *tmatching* is shorter, because it is multiplied by N, the database search may be too slow for real-time applications.

To reduce the number of comparisons of the input fingerprint against fingerprints stored in the database system, the so-called "exclusive classification" methods are used in which the fingerprints are distributed in pre-established disjoint groups, so that the input fingerprint is classified into one of these groups and is only compared with the fingerprints registered in that group. The commonly used scheme follows the proposals by Galton and Henry, distinguishing five groups of fingerprints ("arch", "whorl", "tented arch", "left loop" and "right loop"). The problem is that most of the prints belong to only three groups ("right loop", "left loop" and "whorl"), whereby a large reduction in the number of comparisons is not achieved in an extensive fingerprint database [Maltoni2009]. Another problem of exclusive classification methods is that the process of determining the class to which a fingerprint belongs is in many cases an ambiguous operation. These drawbacks have led to the emergence of the so-called "continuous classification" methods which assign a vector with numeric characteristics to each fingerprint. Thus, in the indexing phase, an indexed table or database of fingerprints is created. In the retrieving phase, in the presence of an input fingerprint with a representative feature vector, the similarity between the input vector and those stored is calculated by a distance measurement, so that a reduced list with the most similar M candidates (M being much smaller than N) can be obtained Then other methods of identification can be applied to determine the correct individual from among those selected.

A fingerprint is a greyscale image in which ridges and valleys are distinguished. Direct comparison of greyscale fingerprints does not offer good results, besides being an expensive technique in terms of computing and storage. It is better to process the image to obtain distinctive and compact features. Features at 3 levels are usually referred to depending on the level of detail with which the fingerprint is analysed. Level 1 features are obtained from an overall fingerprint analysis. An example is the directional image (field or map) (also called orientation image, field or map) containing local orientations of the ridges relative to a reference axis. Another example relates to the singular points, which are points of the fingerprint where orientations converge ("cores") or diverge ("deltas") and around which most of the distinctive information of a fingerprint is found. Level 2 features are obtained from a local analysis of the fingerprint in greater detail. For instance, the traditional minutiae points, which may be endings (where the ridges end) and bifurcations (where the ridges divide into two). Level 3 features (such as pores or incipient ridges) are obtained after a very detailed analysis of the fingerprint that requires its retrieval with very good quality. Feature extraction is more distinct and more expensive the higher the level is.

So far, techniques employing level 3 features have hardly been disclosed. Indeed, various techniques employing level 2 features have been reported. The preliminary step in all these techniques is to extract the minutiae. The minutiae extraction processes are complex because the fingerprint image has to be prepared to locate the minutest details (the minutiae are hardly robust to possible fingerprint image noise). For example, the most common minutiae extraction technique requires the fingerprint image to be enhanced, segmented, binarized and thinned. A widely known example of minutiae detection algorithm is the MINDTCT [NBIS]. Fingerprint matching based on minutiae is relatively slow and, therefore, is not suitable for indexing (for example, using algorithms such as BOZORTH98 [NBIS]). Indexing techniques using Level 2 features apply a post-processing on the minutiae extracted. For example, in the Patent entitled "Method for searching fingerprint database based on quantum algorithm", CN102495886 (A), a set of minutiae is selected and expressed in polar coordinates with respect to reference points that are also conveniently chosen. In the Patent entitled "Fast fingerprint identification and verification by minutiae pair indexing", WO2008135521 (A2), indexing by minutiae pairs is used. The Patent entitled "Methods and systems for automated fingerprint recognition", WO2008098357 (A1) associates minutiae patterns with fingerprints. The method and system proposed in the document "Progressive fingerprint matching system and method", US2004062426 (A1) is based on fingerprint matching by minutiae. In "Fingerprint verification", US2005058325 (A1), the minutiae are sampled and sorted into subsets. In "System and method for matching (fingerprint) images an aligned string-based representation" US6185318 (B1), the minutiae are used as reference points. In "Methods and related apparatus for fingerprint indexing and searching" US6181807 (B1), minutiae of the fingerprints are extracted and compared in the search process. In "Vector based topological fingerprint matching" WO9532482 (A1), the positions of the minutiae are employed and are assigned an index number. Other known techniques are those employing triplets of minutiae. In "Fingerprint identification method based on triangulation and LOD technology", CN101620677 (A), a triangulation technology is used to extract vectors of global and local features. Previously it has been proposed to use all possible triples which can be formed with each minutia.

Other authors propose applying the Delaunay triangulation of order 1 to the coordinates of the minutiae to assign a unique topological structure to each fingerprint. Other techniques known in the art use Delaunay triangles of an order greater than 1 to extract more geometric information. Another technique that uses Level 2 features is the MCC ("Minutia Cylinder-Code") representation, which assigns to each minutiae a local structure that encodes the probability of finding minutiae around it, with a difference of orientation being similar to a given value.

Techniques using Level 1 features offer competitive performance with a much lower computational cost. In fact, extracting the directional image is a necessary step in most minutia extraction and fingerprint matching algorithms, so the cost is arguably zero. These techniques differ from each other in how they extract representative and compact characteristics of the directional image. For example, known techniques use a fingerprint orientation model based on two-dimensional Fourier expansions to adjust to the intrinsic frequency of the orientations. Other solutions use a set of polar complex moments (PCMs) to extract features of the directional image being invariant to fingerprint rotation.

"New fingerprint database retrieval method", CN102368242 (A) uses singular points, information about the relationship between singular points and orthogonal invariant moments. In the document entitled "Method for rapidly calculating fingerprint similarity" CN101996318 (A), similar topological units are sought between each pair of fingerprints compared, they are expanded to obtain larger similar topological units and are grouped to obtain a measurement of overall similarity.

Most solutions for fingerprint identification and indexing are software implementations that involve algorithms having a high computational cost in terms of time and resources. The cost is high, not only for the extraction of characteristics, but even for the matching algorithm that calculates the similarity between the characteristics of the input fingerprint and the stored fingerprints.

Indexing solutions are usually assessed showing, for a given penetration rate (an average percentage of the fingerprint database to be analysed), the error rate (percentage of input fingerprints whose registration is not retrieved from the list containing greater similarities with that penetration). This is the penetration rate defined as the percentage of candidates who are considered to verify if the true holder of the input fingerprint is among them (M / N). Another measurement commonly analysed to evaluate the accuracy of an indexing technique is the average rate in an incremental search scenario, which is calculated as the average rate to be carried out when errors need to be avoided in the retrieval of the input fingerprint holder. The average times invested in searching are not often reported and neither are the report requirements. Works in which they are reported show times for implementation on PCs: 67 ms on an Intel Pentium 4, 2.26 GHz and 1.6 ms, 14 ms or 16 ms (depending on the technique) on an Intel Core 2 Quad 2.66 GHz on 2000 fingerprints of the database NIST DB4.

For identification solutions, once the feature vector has been generated and compared with stored vectors, an ordered list of fingerprints is not generated yet a matching a threshold is set to accept or reject whether an individual is who he claims to be. In this case, the false rejection rate (FRR) and false acceptance rate (FAR) are measured rather than penetration rates, as in the indexing case. Also known as FNMR ("False Non-Match Rate") or FMR ("False Match Rate"), respectively.

The context of application of these solutions is usually forensic and for the police, wherein the fingerprints taken from an individual are acquired without his cooperation (for example, when attempting to identify a deceased person or an offender). It is known as an "offline" context, so the capture may be of poor quality and algorithms may be performed on PCs without particularly restrictive requirements of speed and memory consumption. There are fingerprint databases, such as the "Fingerprint Verification Competition" [FVC], which are built with many poor quality and ill-gotten captures to test the accuracy of complex identification and indexing techniques.

With regard to the so-called "online" context of application, the user of a recognition system cooperates with the system because he wants to authenticate his identity (for example, an access control system). In this case, captures are of much better quality and interaction with the user is even possible in order to enter either their fingerprint properly. In this line, a solution for estimating the quality of a fingerprint is known based on an algorithm for extracting singular points that satisfies the constraints in terms of resources, response time and recognition results imposed for a smart acquisition application in an embedded hardware device. The patent entitled "Method for authenticating an individual by use of fingerprint data", US7136514 (B1), takes into account that the individual who introduces his fingerprint by means of a swipe sensor can swipe his finger in different directions relative to the axis of the sensor. In "Fingerprint matching" GB2320352 (A), quality indices are used in the feature vector extraction to then use them for the calculation of the match between fingerprints.

Speed requirements are restrictive in the context of online application because the operation must be in real time. The ease of use of the system and price may also be important requirements in this context. The user can comfortably use a small, light and inexpensive electronic device, such as a card or "token" with reduced resources. The resources available to a smart card or a DSP for embedded devices are much more reduced than those of a PC: CPUs 50 or 100 MHz and available memory (ROM, EEPROM and RAM) of a few tens of KBytes at best.

Times increase greatly if the platform where the algorithms are implemented has few resources. For example, the MINDTCT algorithm, adapted and executed on an embedded LEON2 processor takes for its execution nearly three orders of magnitude more than on the PC platform (reportedly about 100 s). For this reason, feature extraction is usually carried out on a standard PC platform and solutions that use cards or DSPs for online fingerprint recognition only implement the matching algorithm between the stored characteristics and those coming from outside. Moreover, the stored characteristics are usually of a single individual (1 versus 1 matching instead of 1 versus N). This solution is usually termed "match on card".

Still, solutions have been proposed in which the matching algorithm software is redesigned, fixed point arithmetic is used and the set of instructions of the embedded processor is extended to accelerate implementation. "Match on card" algorithms have been recently studied in the MINEX II campaign organized by NIST. The results show to be less accurate than those executed on a PC platform. Another option for implementation in embedded systems is to use FPGAs ("Field Programmable Gate Arrays"). The FPGAs can implement hardware coprocessors to accelerate the execution of the algorithms. For example, there is a solution proposing the direct correlation of greyscale images using a Virtex 4. For fingerprint indexing applications, there is a technique that creates a fingerprint database whose indices are based on the extraction of minutiae, wherein the fingerprint database and the database search are implemented on PCI boards in FPGAs while the extraction of minutiae is performed on the PC which the boards are connected to.

In terms of security, it is very interesting that the whole process of feature extraction, storage and matching can be performed on the same device, which is called "authentication on card", because in this way the distinctive characteristics of individuals are confined within of a much smaller perimeter, which, therefore, is easier to control and defend. In this line, there are solutions in which a minutiae extraction algorithm is implemented in a Spartan 3 FPGA and solutions implementing a system of recognition based on the location of singular points on a Celoxica RC203E board equipped with a Virtex II FPGA. Instead of simplifying the algorithms to be implemented, the solution analysed in a second option is to use FPGAs that are reconfigured according to the task (extraction of directional image enhancement and segmentation of fingerprint image, binarization, smoothing, thinning, minutiae detection, alignment and matching). This idea of "authentication on card" appears in several patents. These include "Biometric identity verification system and method", US 20080223925 A1, and among the most recent, "Smart card System with ergonomic fingerprint sensor and method of using" US 8,276,816 B2.

Another major problem of identification systems based on fingerprints, and not related to the implementation but by their very nature, is the lack of diversity in obtaining distinctive characteristics. For example, a user has 10 fingers at most. If it is discovered that an impostor seizes the characteristics of one of his fingers, the individual has already lost 10% of his possible features. If the impostor seizes the characteristics of all 10 fingers, the individual can no longer register in any system. This problem is also known as low reversibility of the system, i.e., it is difficult to generate new features when others have been discovered or compromised.

To prevent the features from being compromised, systems have been proposed that transform them using non-reversible functions, such as hash functions, so that recovering the original features from the transformed features is virtually impossible from the computational point of view. In these systems, the measurement of similarity or match between the input characteristics and those previously recorded is performed in the transformed space. So it is necessary to analyse exactly how the transformation affects the performance of the resulting system (for example, regarding false acceptance and false rejection rates). This solution does not solve the problem of diversity because the transformation of features does not increase the number of possible features. To do this, a random number can be used (known as "salt" in cryptographic techniques) that is combined with the original features, so that the transformation is different even when using the same biometric information. The "salt" acts as a password that the individual must enter into the system as well as his fingerprint. The disadvantage of this solution is that the password and the transformed features should not be made public to increase system security.

Another scheme which has the advantage of not requiring secure storage of information is the so-called "biometric cryptosystems". They are based on combining the original biometric features (without any transformation) with additional information so that the resulting data, known as "helper data", can be made public. The two most widely used techniques in cryptosystems have been called *Fuzzy Commitment* and *Fuzzy Vault*. Fuzzy Commitment is a more basic and simpler scheme than Fuzzy Vault. In return, Fuzzy Commitment requires the feature vector to be a binary, ordered and fixed length vector. Fuzzy Commitment is implemented in the following two phases:

- Registration phase: the biometric feature is combined (usually by XORing, in the case of binary features) with a code word generated by applying an error correcting code to a random number, key or password (password). The result is helper data that do not need to be stored securely.
- Secret verification or retrieval phase: the new biometric characteristic, slightly different from that obtained during registration (which is common), is combined with the helper data, which is public, to retrieve the code (applying an error corrector code). Based on the information retrieved in this phase, a cryptographic key can also be generated.

Today, most fingerprint identification methods reported (and encryption systems based on them) use feature vectors and techniques for extracting and comparing that are not suitable for electronic devices with reduced computing and storage resources. Hence the need for fingerprint identification solutions being valid for cryptosystems and which, while maintaining good recognition results, are suitable for low power consumption electronic devices, with limited calculation capacity and do not require a powerful and / or bulky "hardware" using large resources.

## DESCRIPTION OF THE INVENTION

A method and a device is proposed for the implementation of the method that allow, through a series of processes using a captured image of a fingerprint, the generation of a feature vector based on Level 1 features, particularly on directional image segmentation into homogeneous regions. The method allows to obtain a fixed length bit string from the fingerprint preferably captured online by a fingerprint sensor used in automatic identification systems (optical, capacitive, etc.).

In one possible embodiment, the method described herein can be adapted and used in classification applications in which the fingerprints of individuals are distributed in more or less disjoint groups, according to the clustering algorithm that applies on the feature vectors. The method can also be used in indexing and identification / authentication applications, in which individuals are recorded by the feature vectors generated in a indexing or registration phase. In the retrieval or verification phase, given an input fingerprint, an ordered list of candidate individuals for that fingerprint is generated (in the indexing) or the best candidate is identified (in identification applications). For authentication, a single individual is recorded and in the verification phase the similarity between the generated and the stored vector is measured. If it exceeds a threshold, the individual is authenticated. Otherwise, he is not authenticated.

The method described herein can be used in multi-biometrics. Given several samples of fingerprints captured from different fingers of a single individual, the vectors obtained for each finger are concatenated to obtain a vector of digital identification of the individual. And also, given several samples of fingerprints captured from a single finger, the vectors obtained for each sample are concatenated to obtain a fingerprint identification vector.

The method can be used in identification (and authentication) applications by double factor because the vector generated can be combined easily with vectors derived from keys or passwords.

The method can be used in so-called template protection schemes. In particular, it is well suited for cryptosystems based on Fuzzy Commitment technique, because the vector generated is binary, ordered and fixed length. In these schemes, the method of the invention offers the advantages of non-reversibility of transformed vectors and diversification of vectors generated, maintaining accuracy in the identification (and authentication).

The method proposed in this invention can be implemented in a low cost electronic device (with reduced computing and memory resources), such as an FPGA or an application-specific integrated circuit, offering good performance in terms of feature extraction times (placing them below the millisecond for standard sized fingerprints), matching and candidate classification times (negligible values of few nanoseconds per candidate) and memory requirements (just over 100 bytes per fingerprint). So a very secure solution can be achieved because all the biometric information of individuals can be confined in the same electronic device and not leave it.

The object of the invention is based on an online application context, i.e., the device user cooperates in the identification, unlike other fingerprint identification application contexts, such as forensic or police contexts, in which the user does not cooperate (because he is dead or does not want to be identified). In an application context in which the individual wishes to register and identify himself, quality characteristics are extracted. In any case, the device embodying the invention allows the evaluation of the quality of the process and online interaction with the user to avoid faulty fingerprint captures.

The identification method is based on generating a fingerprint feature vector for identification from a first image thereof containing the same ridges and valleys of the fingerprint; for this purpose, the following steps are performed:

a) determining for each pixel of the first image, $p_{ij}$ (where ij refer to the row and column of the pixel in the image), at least one portion of at least one ridge,
b) determining a tangent to said ridge,
c) establishing an angle $\alpha_{ij}$ that forms said tangent relative to a reference axis,
d) dividing the interval of possible values of angles $\alpha_{ij}$, which can form the tangents to the crests relative to a reference axis, in G subintervals ($g_1$,..., $g_G$) being non-overlapping and whose binding results in the complete interval of possible values, each sub-interval $g_k$ encompassing angles from $\alpha_{k-1}$ to $\alpha_k$, wherein each sub-interval $g_k$ comprises angles comprised between 0° and 180°.
e) label each subinterval $g_k$ with a label, $c_k$,
f) associating, for each pixel $p_{ij}$ of the first image, the label corresponding to the sub-interval to which the angle $\alpha_{ij}$ corresponding to that pixel belongs,
g) generating a second image from the first image, wherein in said second image each pixel has at least one label associated,
h) performing a smoothing process on the second image to obtain zones comprising pixels with the same labels,
i) locating at least one convex core point in the second smoothed image,
j) defining a window centred on the convex core point,
k) performing sampling of pixels comprised in the window,
l) obtaining at least one label for each pixel sampled in the preceding step, and
m) generating the vector from the labels obtained in the preceding step in an orderly manner.

Determining the sub-interval, to which the angle $\alpha$ forming the tangent line to at least one ridge on the pixel belongs, is determined from the calculation of a horizontal gradient ($G_x$) and a vertical gradient (Gy) of at least one ridge in that pixel.

Determining the sub-interval $g_k = [\alpha_{k-1}, \alpha_k)$ that is associated with the pixel $p_{ij}$ comprises:

- determining a sign of $G_x$
- determining a sign of $G_y$
- determining that:
- $\alpha$ belongs to a first quadrant between 0° and 90° when $G_x$ and $G_y$ have the same sign, and, within this first quadrant:

$$\begin{cases} \alpha \in [\alpha_{k-1}, \alpha_k) \text{ being } \alpha_k < 90º , \text{ if } G_x \cdot \tan(\alpha_{k-1}) \leq G_y < G_x \cdot \tan(\alpha_k) \quad or \\ \alpha \in [\alpha_{k-1}, \alpha_k) \text{ being } \alpha_k \geq 90º, \text{ when } G_x \cdot \tan(\alpha_{k-1}) \leq G_y \end{cases}$$

- $\alpha$ belongs to a second quadrant between 90° and 180°, when $G_x$ and $G_y$ have different signs, and, within this second quadrant:

$$\begin{cases} \alpha \in [\alpha_{k-1}, \alpha_k) \text{ being } \alpha_{k-1} \leq 90º , \text{ si } |G_y| > |G_x \cdot \tan(\alpha_k)| \quad or \\ \alpha \in [\alpha_{k-1}, \alpha_k) \text{ being } \alpha_{k-1} > 90º, \text{ when } |G_x \cdot \tan(\alpha_{k-1})| \geq |G_y| > |G_x \cdot \tan(\alpha_k)| \end{cases}$$

The smoothing process calculates for each pixel $p_{ij}$ of the second image preferably which of the labels most often appears in a window of S x S pixel size of the second image, window centred on the pixel to be smoothed, wherein S can be factored as S = s1 x s2 x ... x sn, a process which comprises:

- starting with windows of s1 x s1 pixel size and applying smoothing to their s1 x s1 labels,
- continuing with windows of (s1 s2 x) x (x s1 s2) pixels and applying smoothing on s2 x s2 labels previously smoothed in the preceding step,
- Proceed this way until the window size is (s1 x s2 x ... x sn) x (s1 x s2 x ... x sn) pixels and apply smoothing on sn x sn labels previously smoothed in the preceding step.

The determination of the convex core can involve the following steps:

- converting the second smoothed image comprising G sub-intervals, $g_1$, ..., $g_G$, and therefore, each of its pixels contains one of G labels ($c_1$, ..., $c_G$), wherein preferably $G \geq 4$, a smoothed tetra-directional image

which comprises four sub-intervals, wherein each of its pixels comprises one of four labels ($c'_1$,..., $c'_4$) and the conversion in turn comprises:

- changing each label $c_k$ associated with the sub-interval $g_k$ of the second image for that label $c'_k$ associated with a sub-interval $g'_k$ of the tetra-directional image that verifies that the intersection $g_k \cap g'_k$ is the largest, and
- determining the convex core as the point where three of four homogeneous regions of tetra-directional smoothed image touch, which are regions that encompass most convex curved ridges.

Also the invention described herein likewise covers as another object thereof a device for generating a fingerprint feature vector from an image of the same, a device which is associated with fingerprint image capturing means and characterized in that it comprises:

- a label allocation block intended to assign to each image pixel one among G possible labels, which generates the second image,
- a smoothing a block intended to perform a smoothing process of the second image to obtain zones comprising pixels with the same labels,
- a fingerprint convex core determination block, designed to locate at least one convex core point in the second smoothed image,
- a window block intended to define a window centred on the convex core point, to sample pixels comprised in the window, to obtain at least one label of each sampled pixel and generate the vector from the labels obtained in an orderly manner.

The label allocation block comprises:

- a filter, preferably Sobel 3x3 with convolution masks and integer values and powers of 2 for calculating horizontal gradients ($G_x$) and vertical gradients (Gy) of the fingerprint ridges, and
- logical OR and AND type operators, relational operators and operations of absolute value and multiplying by constant values.

The smoothing block is adapted to process the second image by scanning its pixels one by one and providing the pixels of the smoothed image likewise one by one, wherein the smoothing block defines a window sized SxS, wherein S can be factored as S = s1 x s2 x ... x sn, and wherein the smoothing block comprises a number of records n sub-blocks with a series-parallel hybrid architecture of which:

- a first sub-block with a window size of s1 x s1 is adapted to apply a smoothing function in parallel on s1 x s1 pixel labels that have been stored in the relevant records, sub-block whose resulting label is progressively stored one after another in a series of records;
- a second sub-block with a window size of (s1 x s2) x (s1 x s2) is adapted to apply a smoothing function in parallel on s2 x s2 labels previously smoothed by the first sub-block and available in the corresponding records storing the output of the first sub-block, sub-block whose the resulting label is progressively stored one after another in a series of records;
- and so on to a nth sub-block with a window size of (s1 x s2 x ... x sn) x (s1 x s2 x ... x sn), which again applies the smoothing function in parallel on sn x sn labels previously smoothed by the preceding sub-block and available in the records that store the output of the preceding sub-block, sub-block whose output provides the label pixel in the smoothed image.

The convex core determination block comprises:

- a sub-block of the convex core determination block adapted to convert the second smoothed image into a tetra-directional image preferably truncating the $\log_2 G$ bits of each pixel to 2 bits which encode the tetra-directional image labels, and
- a sub-block of the convex core determination block adapted to locate at least one convex core point.

Additionally and in various embodiments, the following may be available:

- A memory block for storing the captured fingerprint image.
- An image enhancement block designed to process the same improving its quality.
- An information fusion block adapted to: acquire a key or password, apply a non-reversible function (hash) to said key or password and combine the result of the preceding step with the fingerprint feature vector.

Since the finger, the fingerprint, are not always oriented in the same way relative to the sensor, the option of including an image orientation block intended to rotate it to a certain position in the event that the fingerprint captured by the fingerprint image capture means is not in a particular position, a block that preferably rotates by fixed angles to apply linear transformations between original pixels $(x_i, y_i)$ and the pixels of the rotated images $(x_f, y_f)$ with fixed linear transformation parameters for each rotation, and a block which in a possible embodiment may be programmable in the number of rotations and the parameters associated with the rotations.

In the case of template protection ("template"), the device that implements the method may further comprise:

- An acquisition block adapted to acquire a random number, key or password and apply an encoder of an error correcting code to generate a secret,
- A block with XOR operators adapted to calculate and store public helper data from the fingerprint feature vector and the secret and
- An error correction code decoder block adapted to retrieve a secret from a feature vector extraction and from the helper data stored for the fingerprint associated with the secret.

All blocks described above may be included in a low cost electronic device, which also allows user interaction based on quality assessment using indicators mainly extracted from the smoothing operation. The device may have LEDs to inform the user with a simple colour code that the fingerprint has been acquired with good quality and / or the finger has been properly placed on the sensor (e.g. an illuminated green LED indicates correct process and a red LED indicates error). The device can provide the user more extensive information on the capture (visually using a small LCD panel or audibly through a simple voice synthesizer), such as for example "the finger has been placed too low down on the sensor". Since the context of application is online and the user is present, this information may result in the user placing his finger once again on the sensor (higher up or lower down, applying more or less pressure, etc., according to the information received by the device). In such case, if the device includes an LCD panel and / or a voice synthesizer for online interaction with the user at the time of capturing the fingerprint, these may also be used to communicate outwardly the candidate(s) selected in the recognition process.

Online interaction with the user provides quality biometric samples and therefore reduce error rates obtained for low penetration rates in the fingerprint database and the average penetration rate in an incremental search scenario in an indexing application. As a result, the average number of candidates among which the holder of an input fingerprint always appears is a small percentage of the entire database. Also by user interaction, false rejection rates (FRR) and false acceptance rates (FAR) improve for an identification application.

## DESCRIPTION OF THE DRAWINGS

To complement the description being made and in order to aid a better understanding of the characteristics of the invention according to a preferred practical embodiment thereof, a set of drawings are included as an integral part of said description which solely for illustration and without limiting the scope of the invention shows the following:

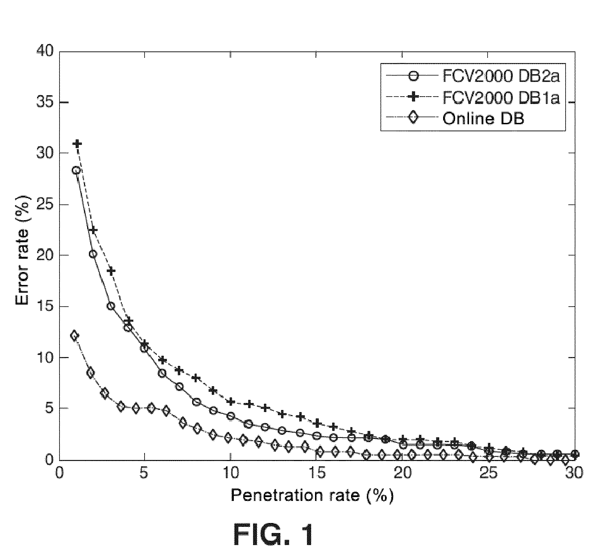

Figure 1 shows a graph exhibiting the error rate against the penetration rate obtained with the method of the invention applied to three fingerprint databases: FVC2000 DB2a and FVC2002 DB1 a (of the "Fingerprint Verification Competition" fingerprint databases) and a fingerprint database generated from users of an experimental online identification system.

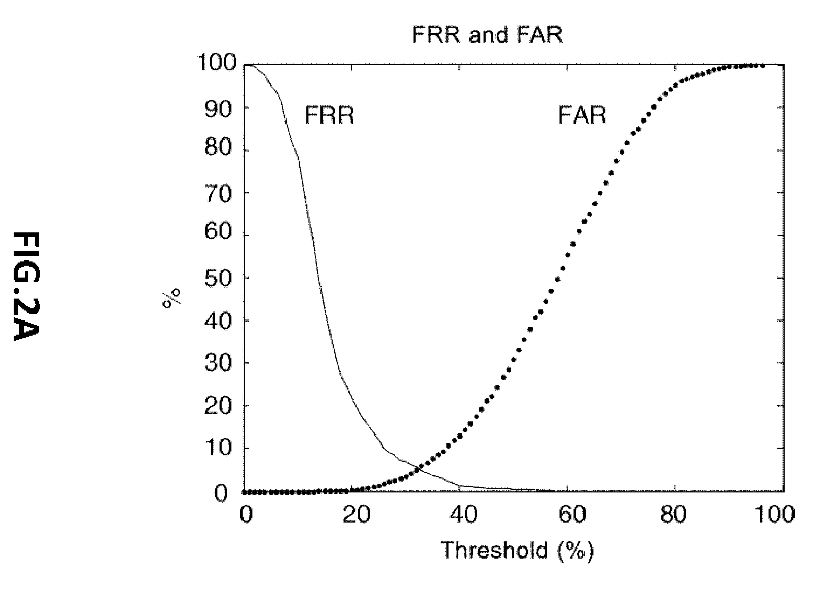

Figures 2a-2d.- show graphs which represent the false acceptance rate (FAR) and False Rejection rate (FRR) against a threshold which measures the percentage of different labels among the feature vectors obtained with the method of the invention applied to the online fingerprint database: (a) Without applying multi-biometric fusion. (b) With fusion (minimum operator) of 3 samples per fingerprint in the registration phase. (c) With fusion (sum operator) of 2 fingers and (minimum operator) of 3 samples per finger in the registration phase. (d) With fusion of a sample of one finger and password.

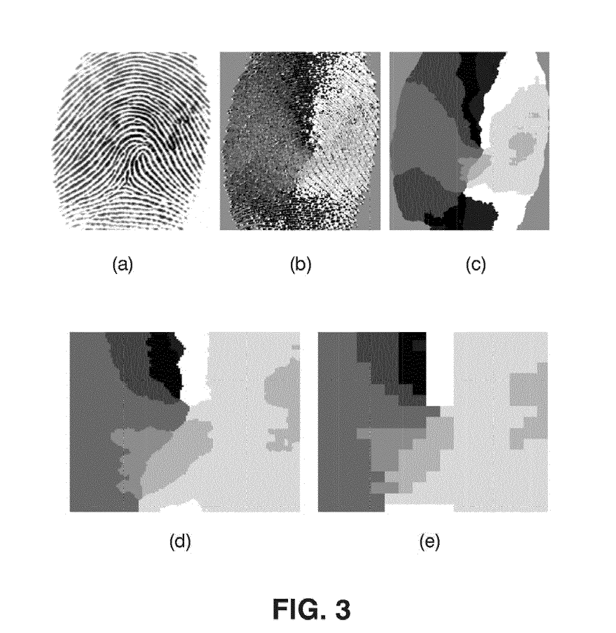

Figures 3a-3e.- show some pictures with possible outcomes of the basic steps of the method for generating a feature vector of a fingerprint: (a) First image basis of the method, a greyscale image captured by an optical fingerprint sensor (taken from the FVC2002 DB1). (b) Second image generated by the method, wherein each pixel has associated one of eight labels (each of the eight labels is represented by a greyscale). (c) Second smoothed image, with homogeneous regions of labels. (d) Distinctive information window centred on the convex core point. (e) Pixels sampled from the window to obtain the feature vector.

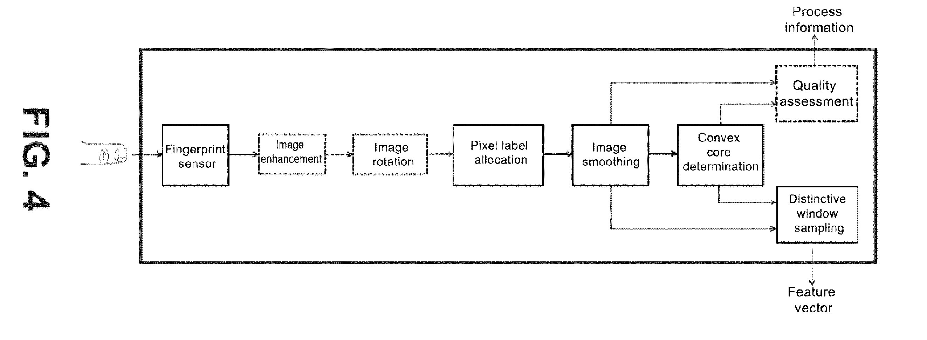

Figure 4 shows the functional block diagram of a device that extracts a vector of distinctive characteristics of a fingerprint. The blocks drawn with dashed lines are used or not depending on the application.

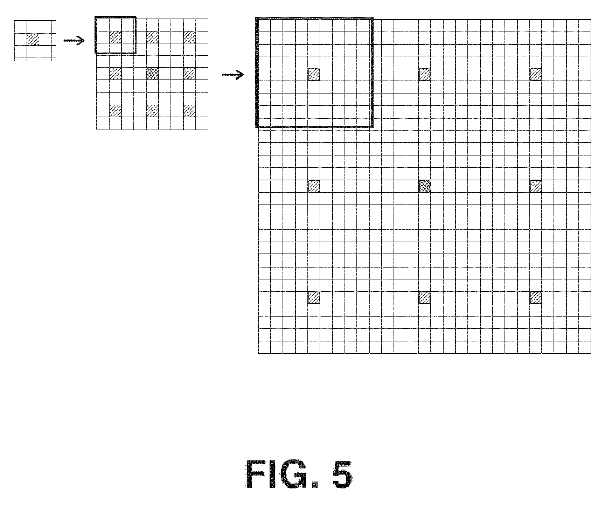

Figure 5 shows a representation of the 27 x 27 smoothing block employing three sub-blocks: a first sub-block with a window size of 3 x 3, which smoothes 3 x 3 pixels; a second sub-block with a window size of 9 x 9 which applies smoothing on 3 x 3 resulting from the preceding sub-block; and finally a sub-block 27 x 27 which applies smoothing on 3 x 3 resulting from the preceding sub-block.

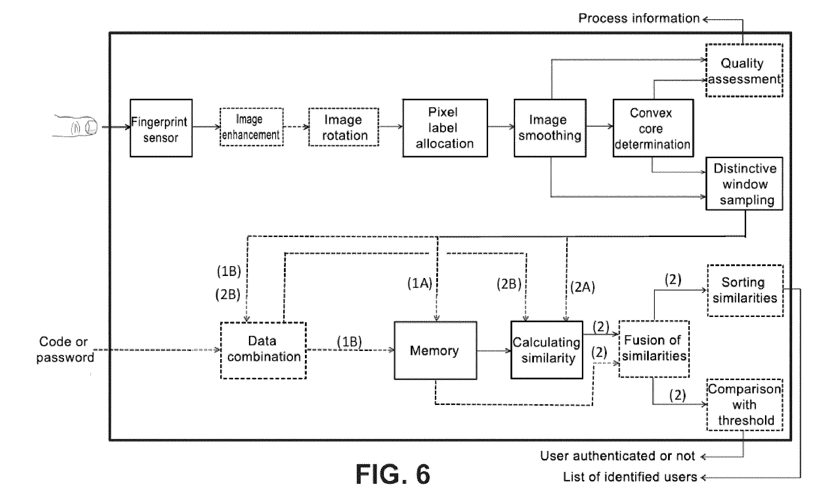

Figure 6 shows the functional block diagram of a device that implements a method of indexing and identification / authentication by fingerprints and possible code: (1A) registration phase without code (2A) Verification phase without code (1 B) Registration phase with code (2B) Verification phase with code. The routes that are not marked are used both in the registration and the verification phase. Blocks and routes drawn with dashed lines are used or not depending on the application.

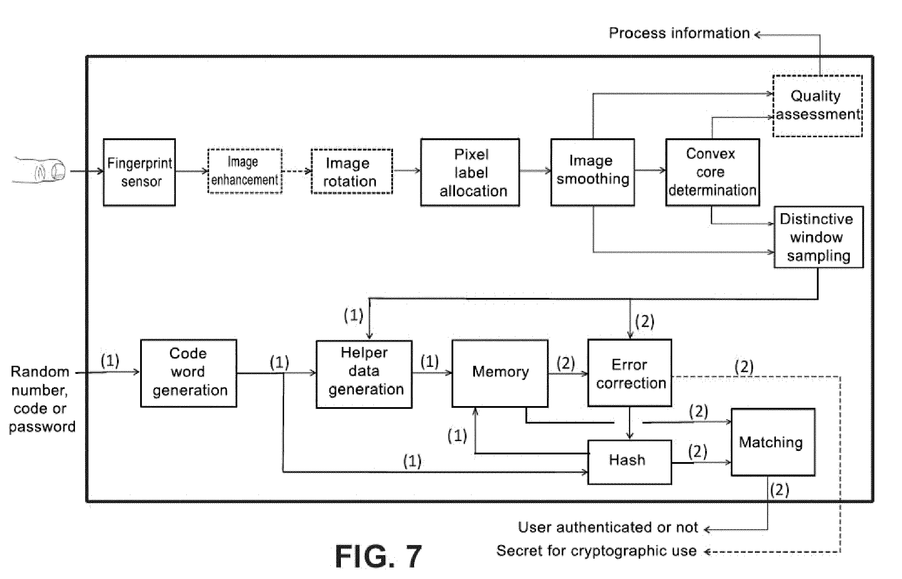

Figure 7 shows the functional block diagram of a device implementing a biometric cryptosystem of fingerprint identification / authentication: (1) Registration phase (2) Verification phase. The routes that are not marked are used both in the registration and the verification phase. Blocks and routes drawn with dashed lines are used or not depending on the application.

**PREFERRED EMBODIMENT OF THE INVENTION**

In view of the figures, an embodiment of the object of the invention disclosed herein is described below.

The method of the invention has been implemented in an electronic device also object of this invention; for a particular embodiment of the device, an implementation in a Xilinx FPGA a Virtex-6 XC6VLX240T-3FFG1156, containing 37680 slices and 416 blocks of 36 Kbits RAM is selected. The method of the invention could also be implemented in application specific integrated circuit (ASIC); in this case, the electronic device would be even smaller, it would consume less power and could be integrated with fingerprint sensors (e.g. capacitive) employing CMOS technologies.

A preferred embodiment of the method of fingerprint identification from extraction of feature vectors of the invention has been implemented as follows. A block assigns to each pixel of an image corresponding to a fingerprint, one of eight possible labels, using 3 bits to encode the labels, 8 bits to encode luminance of the greyscale fingerprint image and 14 bits for the gradients (obtained by Sobel 3x3 filter), generating a second image.

A block applying smoothing on the second image uses a 3x3 smoothing block cascaded with another 9x9 block, cascaded with another 27x27 block. A block detects the convex core of the fingerprint as the point where three of the four regions of the smoothed tetra-directional image intersect.

The second smoothed image is processed to select a distinctive window centred on the convex core. In this case the dimensions of window are 129x129 pixels, 8 pixels sampled at a time, that is, a string of 867 bits is generated per captured fingerprint. The implementation also includes blocks for calculating quality indicators, a memory for storing the fingerprint image in greyscale and a block that applies a rotation on the greyscale image stored in the memory. All this occupies 18.31% of the slices and 15.87% of the RAM blocks, being able to reach a maximum operating frequency of 257.7 MHz and considering a fingerprint with 374 rows x 388 columns (such as those of FVC 2002 DB1). Applying processing to the fingerprint one pixel at a time means that the time to obtain the 867 (17x17x3) bits of the feature vector of a capture (without rotations) may be 0.56 ms (374 x 388 / 257.7 $\mu$s).

If 3 rotations of a fingerprint are taken account to register a user, vectors of 2601 (3 x 17 x 17 x 3) bits per user are stored. In the Virtex 6 FPGA considered, vectors of almost 5900 users can be stored in 416 blocks of 36 Kbits RAM.

The block ordering the levels of similarity between the input vector and those stored, which applies an insertion method and generates a list of 50 candidates, occupies 11.48% of all slices of the Virtex 6 FPGA being considered and allows a maximum frequency of 207.5 MHz. This means that the time spent in the retrieval phase is quite low (several tens of milliseconds to order 5900 users).

The same device, in this case the FPGA, may include all the blocks required by the indexing and retrieval phases of the method of the invention. In the case of the Virtex 6 XC6VLX240T-3FFG1156 Xilinx as a single device, 66 blocks of 36 Kbits RAM are used for storing the fingerprint and the distinctive window (considering a fingerprint with 374 rows x 388 columns like those of FVC 2002 DB1) and has 350 blocks of 36 Kbits RAM, allowing the registration of more than 4950 users (considering 2601 bits per user).

The method of the invention implemented in this FPGA embodiment has been evaluated with two fingerprint databases "Fingerprint Verification Competition": FVC2000 DB2a and FVC2002 DB1a with 800 captures each. It should be noted that databases like FVC are built with many poor quality and ill-gotten captures to test the accuracy of complex identification and indexing techniques. In addition, a fingerprint database with 560 captures has also been considered, generated from users of an experimental online identification system.

Finger placement is important to correctly extract the feature vector. In the context of online application in which the user wishes to be identified, the finger is usually placed properly. For example, in the online user registration experiment in which 560 fingerprints were captured, 23 captures did not allow distinctive window extraction (4.11%). For the fingerprint databases FVC2000 DB2 and FVC2002 DB1 with 800 captures, as the application context is different, the number of captures not allowing the correct extraction of the feature vector is much higher: 149 in FVC2000 DB2 (18.6%) and 104 in FVC2002 DB1 (13%).

It is also important to evaluate the quality of the captured image, because in a capture of 560 fingerprints, 10 captures (1.79%) were of very poor quality (because the fingerprints were really damaged). 16 (2%) and 24 (3%) of captures in the fingerprint databases FVC2000 DB2 and FVC2002 DB1 are also of very poor quality (due to damaged fingerprints or not properly acquired captures).

Figure 1 represents the error rate versus the penetration rate obtained with the technique of the invention implemented in this embodiment and applied to the three fingerprint databases considered. In order to obtain this figure, the fingerprints for which the feature vector cannot be properly extracted and are of very poor quality (percentages discussed above) have been removed from all the databases, since by using the device of the invention, which interacts with the user, these percentages would have been reduced to zero. An improvement has been applied on greyscale images (using complex filters) and the convex core detection technique has been reinforced. The feature vectors of the first capture of each individual (with 5 rotations in FVC2002 DB1, 3 rotations in FVC 2000 DB2, and none in the third of the databases) have been take as those recorded in the database. As input vectors, all those of the other captures, without any rotation have been taken. To calculate the level of similarity between the input vector and those stored and previously rotated (in the case of FVC2002 DB1 and FVC 2000 DB2), the maximum levels of similarity with each of those stored is selected.

The average penetration rate to be carried out when errors need to be avoided in the retrieval of the holder of the input fingerprint ("incremental search scenario"), under the same conditions as the results in Figure 1 was 3.16 % in FVC2000 DB2, 2.88% in FVC2002 DB1 and 1.62% in the third database analysed.

The same device, in this case the FPGA, can include an implementation of the winning hash function of the last competition SHA-3 NIST, Keccak, to allow identification / authentication by the double factor "who you are" and " what do you know". This function to generate 512 bits occupies 1188 slices (3.15% of the total) allowing a maximum frequency of 435.3 MHz.

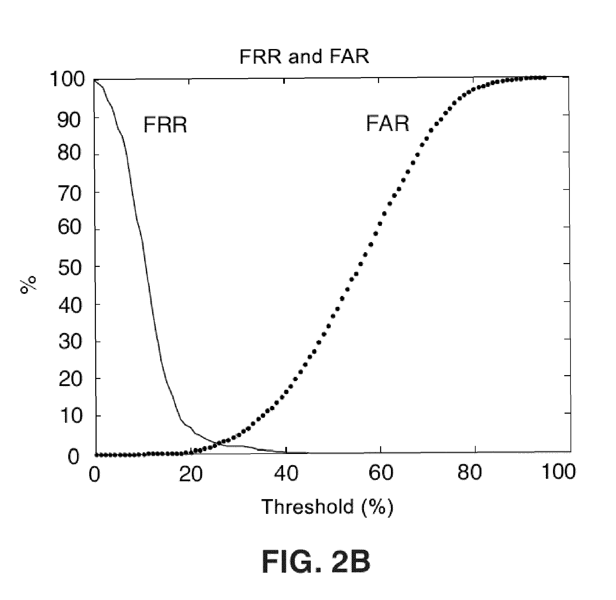

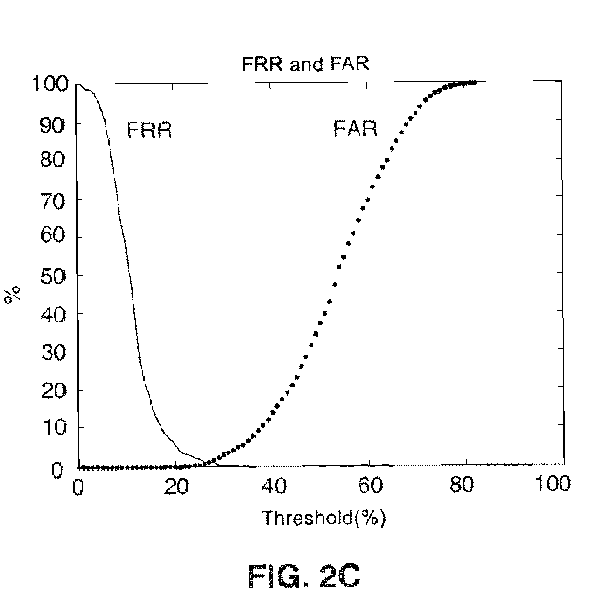

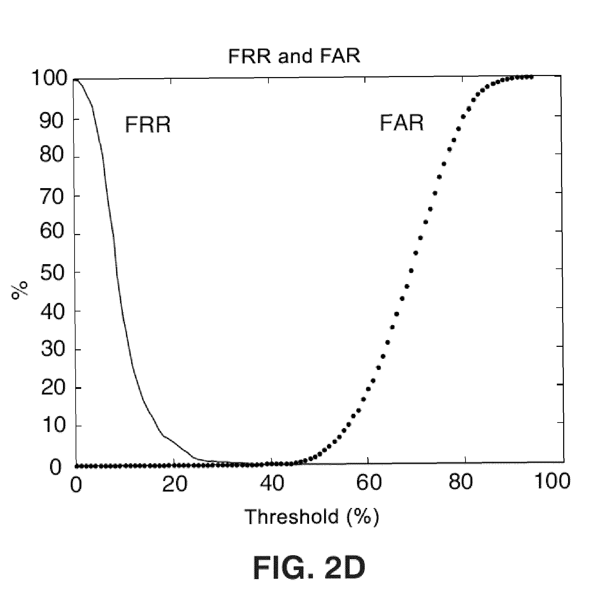

Figure 2 shows the false acceptance rate (FAR) and False Rejection rate (FRR) against a threshold that measures the level of dissimilarity (percentage of different labels between the feature vectors). The results correspond to the fingerprint database with online captures. Figure 2a illustrates the results of a biometric identification without fusion. The value where rates intersect (EER) is 5.4%. Figure 2b illustrates the results of an identification with the fusion of 3 samples captured per each individual's fingerprint in the registration phase and a sample captured in the verification phase. The value where rates intersect (EER) is 2.5%. Figure 2c illustrates the results of an identification with the fusion of 2 fingers per individual, with 3 samples captured per finger in the registration phase and one sample captured per finger in the verification phase. The value where the rates intersect (EER) is 0.9%. Figure 2d illustrates the results of an identification with the fusion of feature vectors with a hash function that returns 512 bits applied on a password for each individual. The value where the rates intersect (EER) is 0%.

The same device, in this case the FPGA, may include all the blocks required by the protection technique of the method of the invention. In the case of the Virtex 6 XC6VLX240T-3FFG1156 Xilinx as a single device, the Reed-Solomon encoder block for n = 511 and k = 383 occupies 473 slices (1.26% of slices) and allows operation at a maximum frequency of 415 MHz. The Reed-Solomon decoder block for n = 511 and k = 383 occupies 24,763 slices (65% of total slices) working with a maximum frequency of 78.5 MHz.

In more detail the method for generating a feature vector of a fingerprint generates a vector which is a fixed-length bit string compactly representing a fingerprint. To obtain this vector, and as detailed above, the basis is a first image such as the fingerprint capture as a greyscale image (Figure 3a), for each pixel, a line tangent to the ridges in that pixel is determined and the angle between said tangent line with respect to a reference axis is calculated. The interval of possible values of angles that can form the tangents to the ridges relative to a reference axis is divided into G sub-intervals ($g_1$, ..., $g_G$), being non-overlapping and whose binding results in the complete interval of possible values,

each sub-interval $g_k$ encompassing angles from $\alpha_{k-1}$ to $\alpha_k$.

Each sub-interval, $g_k$, has an associated label, $c_k$. Each pixel of the fingerprint image has associated the corresponding sub-interval to which the angle forming the tangent line for that pixel belongs. As a result, a second image is generated from the first fingerprint image, wherein in said second image each pixel has at least one label associated (Figure 3b). Then, a smoothing process is performed on the second image to obtain regions comprising pixels with the same labels (Figure 3c). At least one convex core point is located in the second smoothed image and a window centred on the convex core point is defined (Figure 3d). Sampling of pixels comprised in the window is carried out and at least one label for each pixel sampled in the preceding step is obtained (Figure 3e). The ordered labels obtained in the preceding step generate the fingerprint feature vector. If the labels are encoded with bits, the vector is a string of ordered fixed-length bits.

If the number of labels, G, considered is small (for example, four labels), the vector being generated is not very distinctive of the fingerprint, i.e., there may be many fingerprints with a similar vector, which results in a high false acceptance rate, in the case of an identification / authentication application. A number of labels such as four can be used in classification applications in which the fingerprints are divided into pre-established groups according to the similarity of their feature vectors, so that the input fingerprint is classified into one of these groups or it is assigned degrees of correspondence to several of these groups.

Conversely, if a high number of labels is contemplated (for example, sixteen labels), the vector being generated is very distinctive, but it changes too much for different captures the same fingerprint, which results in a high false rejection rate, in the case of an identification / authentication application. In a preferred embodiment of the method of the invention, for identification/ authentication applications, eight labels are chosen, being the case illustrated in Figure 3.

Sub-intervals must cover the whole interval of angles that can form the tangents to the ridges (between 0° and 180°) in a more or less spaced out form. In a preferred embodiment of the invention for classification applications with $G = 4$, the following have been chosen: $g_1 = [0°, 22.5°) \cup [157.5°, 180°)$, $g_2 = [22.5°, 67.5°)$, $g_3 = [67.5°, 112.5°)$ and $g_4 = [112.5°, 157.5°)$, choosing the longitudinal axis of the fingerprint as reference axis. In a preferred embodiment of the invention for identification/ authentication applications with $G = 8$, the following have been chosen: $g_1 = [0°, 22.5°)$, $g_2 = [22.5°, 45°)$, $g_3 = [45°, 67.5°)$, $g_4 = [67.5°, 90°)$, $g_5 = [90°, 112.5°)$, $g_6 = [112.5°, 135°)$, $g_7 = [135°, 157.5°)$ and $g_8 = [157.5°, 180°)$, choosing the longitudinal axis of the fingerprint as reference axis.

The size of the window centred on the convex core depends on the sensor used. For example, for fingerprints of databases FVC2002 DB1 (images of 388x374 pixels captured by an optical sensor), those of FVC2000 DB2 (images of 256x364 pixels captured by a low cost capacitive sensor) and those of an experimental database (images of 440x300 pixels captured using an optical sensor), it has been proven that a suitable window is 129x129 pixels (Figure 3d).

For a distinctive and compact representation of the fingerprint, not all the pixels in the window are necessary, but sampling 1 / n ("down-sampling") is applied, which means using preferably 1 from n consecutive pixels in each row of the window. For example, for the fingerprints of the databases mentioned above, sampling 1/8 on the 129x129 pixel window is applied, which means using the information of 17x17 pixels (Figure 3e). In this example, if the eight labels are encoded with 3 bits, the vector obtained for each fingerprint is a string of 17x17x3 = 867 bits = 108.4 bytes. These vectors can be encrypted for security reasons, and / or compressed (e.g. using "Run-Length Encoding"), to use less memory and / or be transmitted more easily.

The technique for extracting fingerprint feature vectors is implemented by using the following basic blocks (Figure 4):

- A fingerprint sensor that provides a greyscale fingerprint image. If the sensor does not enhance the acquired image, an image enhancement block is included.
- If the position of the finger on the fingerprint sensor i sable to rotate, a block is also included applying rotation to the greyscale input image.
- A block which assigns to each pixel of the image one among G possible labels and generates a second image.
- A block applying smoothing to the second image.
- A block to detect the convex core (or several candidate points to be the convex core) on the fingerprint.
- A block to determine the distinctive window, sample its pixels and store the values of the labels of these pixels in a bit string.
- Additionally, a block that evaluates the quality of the whole process and allows online interaction with the user may be included.

The block that assigns to each pixel of the image one among G possible labels can be implemented using a simple digital circuit. The first step in this block is to calculate the horizontal ($G_x$) and vertical ($G_y$) gradients of the fingerprint ridges with a filter suitable for hardware implementation (e.g. by Sobel 3 x 3 filters using convolution masks with integers and powers of 2). This step is common in any feature extraction technique.

Then, instead of calculating for each pixel the direction of the fingerprint ridges more or less accurately by a trigonometric function (on dedicated hardware, CORDIC, "Coordinate Rotation Digital Computer" processor is usually used to calculate $\tan^{-1}(G_y/G_x)$) and then calculating the sub-interval from among G possible options, the technique of this invention compares among each other the values of $G_x$ and $G_y$ gradients and applies logical operators (OR and AND), relational operators and absolute value operations and multiplication by constant values, which is much more efficient from a hardware view. First, the block determines that $\alpha$ (the angle formed by the tangent to the ridges relative to a reference axis) belongs to a first quadrant comprised between 0° and 90°, when $G_x$ and $G_y$ have the same sign. Second, within the first quadrant, the block determines that:

$$\begin{cases} \alpha \in [\alpha_{k-1}, \alpha_k) \text{ being } \alpha_k < 90^{\circ}, \text{ if } G_x \cdot \tan(\alpha_{k-1}) \leq G_y < G_x \cdot \tan(\alpha_k) \quad or \\ \alpha \in [\alpha_{k-1}, \alpha_k) \text{ being } \alpha_k \geq 90^{\circ}, \text{ when } G_x \cdot \tan(\alpha_{k-1}) \leq G_y \end{cases}$$

The block determines that $\alpha$ belongs to a second quadrant comprised between 90° and 180°, when $G_x$ and $G_y$ have different signs. In this case, in this second quadrant, the block determines that:

$$\begin{cases} \alpha \in [\alpha_{k-1}, \alpha_k) \text{ being } \alpha_{k-1} \leq 90^{\circ}, \text{ si } |G_y| > |G_x \cdot \tan(\alpha_k)| \quad or \\ \alpha \in [\alpha_{k-1}, \alpha_k) \text{ being } \alpha_{k-1} > 90^{\circ}, \text{ when } |G_x \cdot \tan(\alpha_{k-1})| \geq |G_y| > |G_x \cdot \tan(\alpha_k)| \end{cases}$$

Wherein $\tan(\alpha_k)$ and $\tan(\alpha_{k-1})$ are previously known constant values once the sub-intervals to consider have been set, $g_k = [\alpha_{k-1}, \alpha_k)$.

The digital circuit that implements these operations can use fixed-point arithmetic, and words of $\log_2 G$ bits to encode the G possible labels corresponding to the G sub-intervals $g_k$.

The smoothing block applies a window size S x S, wherein S depends, in general, on the type of fingerprint sensor used. Since smoothing in parallel S x S pixels (for high speed processing) can be very expensive, it is possible to cascade several smoothing sub-blocks one after another. If the value of S can be factored as S = s1 x s2 x ... x sn: first a sub-block having a window size s1 x s1 can be used, which applies the smoothing function on s1 x s1 labels of pixels; the second sub-block having a window size (s1 x s2) x (s1 x s2), which applies the smoothing function on s2 x s2 labels previously smoothed by the preceding sub-block, and so on until the last sub-block with window size (s1 x s2 x ... x sn) x (s1 x s2 x ... x sn), which again applies the smoothing function on sn x sn labels previously smoothed by the preceding sub-block.

For example, for optical sensors that capture images of 388x374 or 440x300 pixels or capacitive sensors that capture images of 256x364 pixels, a smoothing block 27 x 27 has been proven suitable, which can be obtained with three cascaded smoothing sub-blocks: a first sub-block having a window size 3 x 3, which smoothes 3 x 3 pixels; a second sub-block of window size 9 x 9 which applies smoothing on 3 x 3 resulting from the preceding sub-block; and finally a sub-block 27 x 27 which applies smoothing on 3 x 3 resulting from the preceding sub-block (Figure 5). In a preferred embodiment, the smoothing function sj x sj considers a window of pixels around the pixel analysed and assigns to it the value of the label appearing more times in the entire window. The technique of cascading n sub-blocks reduces the required hardware and latency of the smoothing process, because processing S x S values in parallel is much more expensive than processing sj x sj pixels in parallel. For example, if the image pixels are being processed one by one, smoothing the entire image can be performed with these sub-blocks in cascade (and record banks needed) investing as many clock cycles as pixels in the image.

The block that calculates the convex core (or candidate points) can use widely known techniques such as those based on Poincare index calculation. An advantage of the method of the invention is that it is possible to reinforce the detection of this point with little computational cost, as described below. Starting from the second smoothed image, a smoothed tetra-directional image is directly obtained.

For example, if G=8 and the eight sub-intervals are $g_1$ = [0°, 22.5°), $g_2$ = [22.5°, 45°), $g_3$ = [45°, 67.5°), $g_4$ = [67.5°, 90°), $g_5$ = [90°, 112.5°), $g_6$ = [112.5°, 135°), $g_7$ = [135°, 157.5°) and $g_8$ = [157.5°, 180°), the following four sub-intervals can be directly obtained $g'_1 = g_1 \cup g_8$, $g'_2 = g_2 \cup g_3$, $g'_3 = g_4 \cup g_5$ and $g'_4 = g_6 \cup g_7$.

Since each pixel of the second smoothed image is represented by 3 bits, obtaining the smoothed tetra-directional image is as simple as truncating from 3 to 2 the bits of each pixel, if the labels are properly encoded. The convex core can be determined as the point where three of four homogeneous regions of the smoothed tetra-directional image intersect, which are the three regions that encompass most convex curved ridges. As the correct detection of the convex core is important to correctly extract the feature vector, several points can be considered as candidates while extracting feature vectors associated with them.

The technique of the invention allows to contemplate fingerprints acquired with the finger rotated about the longitudinal axis of the sensor. The window with representative information of the fingerprint described above is characterized by its invariance to translations of the finger on the sensor since the central point of the window is the convex core point. However, the window is not invariant to rotations.

To ensure that different captures of the same fingerprint acquired with possible rotations present a high level of similarity to the corresponding feature vector stored in the database, a solution with a low hardware cost is to include a block that allows to rotate the greyscale image of the fingerprint. R rotations can be taken into account prior to obtaining the second image (for example with R=5: -22.5°, -11.25°, 0°, 11.25° y 22.5°). If the captured image of the fingerprint, whose pixels have the Cartesian coordinates $(x_i, y_i)$, an angle $\alpha$ is rotated with respect to pixel coordinates $(x_c, y_c)$, the coordinates of the pixels now become $(x_f, y_f)$. This operation can be expressed mathematically as follows:

$$\begin{bmatrix} 1 & 0 & x_c \\ 0 & 1 & y_c \\ 0 & 0 & 1 \end{bmatrix} \begin{bmatrix} \cos(\beta) & -sen(\beta) & 0 \\ sen(\beta) & \cos(\beta) & 0 \\ 0 & 0 & 1 \end{bmatrix} \begin{bmatrix} 1 & 0 & -x_c \\ 0 & 1 & -y_c \\ 0 & 0 & 1 \end{bmatrix} \begin{bmatrix} x_i \\ y_i \\ 1 \end{bmatrix} = \begin{bmatrix} x_f \\ y_f \\ 1 \end{bmatrix}$$

For example, if the rotation point is taken as the centre point of the fingerprint image (for an image of 374 rows and 388 columns, the values for $x_c$ and $y_c$ are 187 and 194, respectively), and the rotation angle is chosen as 11.25°, the above expression can be reduced to the following:

$$\begin{bmatrix} 0.9808 & -0.1951 & 41.4407 \\ 0.1951 & 0.9808 & -32.7542 \end{bmatrix} \begin{bmatrix} x_i \\ y_i \\ 1 \end{bmatrix} = \begin{bmatrix} x_f \\ y_f \end{bmatrix}$$

For example, if each pixel of the input image is directed by its coordinates $(x_i, y_i)$ into the memory where the capture is stored, the block that applies a rotation of 11.25°, as before, now directs that pixel along its coordinates $(x_f, y_f)$. As contemplated rotations are fixed, this block implements a linear transformation between $(x_i, y_i)$ and $(x_f, y_f)$ with constant parameters, whereby the use of multipliers is not required. In a possible embodiment of this block, the number of rotations may be programmable as well as the parameters associated with the rotations.

To make the classification, indexing or identification technique robust against rotations, more or less angles are contemplated depending on the level of rotation to be undergone. Rotations can be contemplated in the indexing or registration phase and / or in the retrieval or verification phase and do not need to coincide in number. For example, in indexing or registration phase, considering P convex core candidates and V pixels per distinctive window, a string of P x V x 3 bits for each rotation can be extracted, as discussed above. If R rotations are contemplated, the total rate used to represent a fingerprint capture concatenates the R bit strings, resulting in a characteristic vector with a length of P x R x V x 3 bits.

The method generates a digital identification number (a vector of R x P x V x 3 bits) that is associated to the individual holding the fingerprint, so that a database can be generated with the N numbers associated with the N registered individuals (vectors can be encrypted for security reasons, and / or compressed, to use less memory and / or be transmitted more easily). In multi-biometric applications that use D fingers per individual, a vector is generated for each individual with D x R x P x V x 3 bits concatenating the D identification numbers obtained from the fingerprint of each finger. In multi-biometric applications that use Z samples of the same finger of the individual, a vector is generated for each individual with Z x R x P x V x 3 bits concatenating the Z identification numbers obtained from each sample.

In the retrieval phase, an ordered list of individuals registered in the database is generated, calculating a level of dissimilarity (or similarity) between the input feature vector and each vector stored. If the vectors have been encrypted and / or compressed, they need to be decrypted and / or decompressed to calculate the level of dissimilarity. The level of dissimilarity is calculated as the percentage of labels that are different between the input vector and each vector stored. In the case of multi-biometrics with D fingers, the global dissimilarity is obtained from the fusion (for example with the addition operator) of the dissimilarities of each finger.

In the case of multi- biometrics with Z samples from the same finger, the global dissimilarity is obtained as the fusion (e.g., with the minimal operator) of the dissimilarities relative to each sample. The list of registered individuals is ordered from lowest to highest level of dissimilarity, being possible to truncate the list of individuals to a given number or a maximum percentage of dissimilarity. In an identification application, the candidate possessing less dissimilarity (or, equivalently, greater similarity) is selected from the list. In an authentication application, the dissimilarity level is compared with a threshold.

To generate different digital identification numbers for the same fingerprint, the number obtained by the method of the invention can be combined with the result of a non-reversible function (hash) of a code or password, the combination being: (a) a simple concatenation or (b) a particular merging of bits or (c) an XOR operation between the two (for this purpose they must have the same bit length), a combination that allows indexing and identification (or authentication) by the double factor "who you are" (the fingerprint) and "what you know" (the code or password) that enables revoking compromising identification numbers, generating new ones with a new code or password.

The technique for performing the retrieval or verification phase is implemented by the following basic blocks (Figure 6): (a) a memory for storing digital identification numbers or feature vectors, Bi (i = 1, ..., N), of N individuals and thus allow registration. (b) A block to calculate the similarity between the identification number obtained from the fingerprint to be identified, B', and the N numbers stored, Bi (i = 1, ..., N), block that calculates the equivalence between an input label and a stored label (both encoded with 3 bits, in the case of G = 8) preferably with three XOR operators whose outputs are the inputs to a NOR operator, then a counter calculates the number of matching labels between the input vector and each stored vector (the level of dissimilarity is the complement of the level of similarity).

(c) For verification, a block that compares the above result with a threshold. In the case of retrieval, a block that orders from higher to lower the similarities with each vector stored, up to a maximum number, M, of candidates. There are many sorting algorithms reported in the literature (for example based on binary or n-ary trees, insertion methods, etc.), being possible to choose one or another depending on the speed objectives and resources used (the fastest algorithms usually need more resources than slower ones and vice versa).

Digital identification numbers, B, generated can be protected using the technique called Fuzzy Commitment, as follows:

- in the registration phase: each user is associated with a random code word, Ci (i = 1, ..., N), an error correcting code (zeros or ones are added to B until the size is the same as that of Ci) and the calculation and storage of a hash function Ci, hash (Ci) is performed, as well as of the results Hi = (B XOR Ci), known as helper data.
- in the verification phase, given an input number, B', Ci' = B' XOR Hi (if B' is similar to B, Ci' will be similar to Ci) are calculated, the error correcting code is applied to Ci' and the hash is applied to the result. If the result matches a stored hash, the corresponding user is identified (if N = 1, the user is authenticated).
- in a possible communication phase, Ci or B = Ci XOR Hi can be used as secrets that generate cryptographic keys to encrypt or authenticate messages.

The error correcting code is preferably a Reed-Solomon code, which treats encoded labels with 3 bits as symbols.
To choose the error rate to be corrected by the Reed-Solomon code, the following can be applied: (a) the percentage of different labels for which it is obtained that the false rejection rate coincides with the false acceptance rate, if an optimum compromise between the two rates is sought; (b) the percentage of different labels for which a null false acceptance is obtained, if the aim is to eliminate intrusiveness; or (c) the percentage of different labels for which a null false rejection is obtained, if the aim is to eliminate rejection of the service.
The technique to conduct the protection of feature vectors is implemented using the following basic blocks (Figure 7): (a) An acquisition block adapted to acquire a random number, code or password and apply an encoder of an error correcting code to generate a code word. (b) An adapted block to generate public helper data from the fingerprint feature vector and the code word, to calculate a hash function of the code word and store the results in a memory. (c) An error correction code decoder block adapted to retrieve a secret from a feature vector extraction and helper data stored for the fingerprint associated with the secret.

**Claims**

1. Method for generating a feature vector of a fingerprint for identification based on a first image thereof containing the same fingerprint ridges and valleys, method **characterized in that** it comprises:

   n) determining for each pixel of the first image, $p_{ij}$, wherein ij refer to the row and column of the pixel in the image, at least one portion of at least one ridge,
   o) determining a tangent to said ridge,
   p) establishing an angle $\alpha_{ij}$ forming said tangent with respect to a reference axis,
   q) dividing the interval of possible values of angles $\alpha_{ij}$, which can form the tangents to the ridges relative to a reference axis, into G sub-intervals ($g_1$, ..., $g_G$) which are non-overlapping and whose binding results in the full interval of possible values of angles, each sub-interval $g_k$ encompassing angles comprised between $\alpha_{k-1}$ and $\alpha_k$,
   r) labelling each sub-interval $g_k$ with a label, $c_k$,
   s) associating, for each pixel $p_{ij}$ of the first image, a label corresponding to the sub-interval to which the angle $\alpha_{ij}$ for that pixel belongs,
   t) generating a second image from the first image, wherein in said second image each pixel has at least one label associated,

u) performing a smoothing process on the second image to obtain zones comprising pixels with the same labels,

v) locating at least one convex core point in the second smoothed image,

w) defining a window centred on the convex core point,

x) performing a sampling of pixels comprised in the window,

y) obtaining at least one label for each pixel sampled in the preceding step, and

z) generating the vector from the labels obtained in the preceding step in an orderly manner.

2. Method according to claim 1 **characterized in that** each sub-interval comprises $g_k$ angles comprised between 0° and 180°.

3. Method according to claim 1 **characterized in that** determining the sub-interval to which the angle $\alpha$, forming the tangent line to at least one ridge in the pixel, belongs is performed from the calculation of a horizontal gradient ($G_x$) and a vertical gradient (Gy) of at least one ridge that pixel $p_{ij}$.

4. Method according to claim 3 **characterized in that** the determination of the sub-interval $g_k = [\alpha_{k-1}, \alpha_k)$ that is associated to the pixel $p_{ij}$ comprises:

   • determining a sign of Gx
   • determining a sign of Gy
   • determining that:
   • $\alpha$ belongs to a first quadrant comprised between 0° and 90°, when $G_x$ and $G_y$ have the same sign, and, within this first quadrant:

$$\begin{cases} \alpha \in [\alpha_{k-1}, \alpha_k) \text{ being } \alpha_k < 90^\circ, \text{ if } G_x \cdot \tan(\alpha_{k-1}) \leq G_y < G_x \cdot \tan(\alpha_k) \quad or \\ \alpha \in [\alpha_{k-1}, \alpha_k) \text{ being } \alpha_k \geq 90^\circ, \text{ when } G_x \cdot \tan(\alpha_{k-1}) \leq G_y \end{cases}$$

   • $\alpha$ belongs to a second quadrant comprised between 90° and 180°, when $G_x$ and $G_y$ have different signs, and, within this second quadrant:

$$\begin{cases} \alpha \in [\alpha_{k-1}, \alpha_k) \text{ being } \alpha_{k-1} \leq 90^\circ, \text{ si } |G_y| > |G_x \cdot \tan(\alpha_k)| \quad or \\ \alpha \in [\alpha_{k-1}, \alpha_k) \text{ being } \alpha_{k-1} > 90^\circ, \text{ when } |G_x \cdot \tan(\alpha_{k-1})| \geq |G_y| > |G_x \cdot \tan(\alpha_k)| \end{cases}$$

5. Method according to claim 1 **characterized in that** the smoothing process calculates for each pixel $p_{ij}$ of the second image preferably which of the labels most often appears in a window sized S x S pixels of the second image, window centred on the pixel to be smoothed, wherein S can be factored as S = s1 x s2 x ... x sn, a method which comprises:

   • starting with windows sized s1 x s1 pixels and applying smoothing to their s1 x s1 labels,
   • continuing with windows of (s1 x s2) x (s1 x s2) pixels and applying smoothing on s2 x s2 labels previously smoothed in the preceding step,
   • So on until the reaching a window size of (s1 x s2 x ... x sn) x (s1 x s2 x ... x sn) pixels and applying smoothing on sn x sn labels previously smoothed in the preceding step.

6. A method according claim 1 **characterized in that** the determination of the convex core further comprises:

   • converting the second image comprising G sub-intervals, $g_1$, ..., $g_G$, and therefore, each of its pixels contains between G labels ($c_1$,..., $c_G$), wherein preferably G ≥ 4, into a smoothed tetra-directional image comprising four sub-intervals, wherein each of the pixels comprises one of four labels ($c'_1$,..., $c'_4$) and the conversion in turn comprises:

      ◦ changing each label $c_k$ associated with each sub-interval $g_k$ of the second image for the $c'_k$ label associated with a sub-interval $g'_k$, of the tetra-directional image which verifies that the intersection $g_k \cap g'_k$ is the largest, and
      ◦ determining the convex core as the point where three of four homogeneous regions of smoothed tetra-directional image touch, which are regions that encompass most of the convex curved ridges.

7. Device for generating a feature vector of a fingerprint from an image of the same according to the method described in claims 1 to 6, a device that is associated with means for capturing a fingerprint image and **characterized in that** it comprises:

• an label allocation block intended to assign to each image pixel one among G possible labels, which makes it possible to generate the second image,
• a smoothing a block intended to perform a smoothing process on the second image to obtain zones comprising pixels with the same labels,
• a fingerprint convex core determination block, designed to locate at least one convex core point in the second smoothed image,
• a window block intended to define a window centred on the convex core point, perform sampling of pixels comprised in the window, obtain at least one label of each sampled pixel and generate the vector from the labels obtained in an orderly manner.

8. Device according to claim 7, **characterized in that** it further comprises a memory block for storing the captured image of the fingerprint.

9. Device according to claim 7 **characterized in that** it further comprises an image enhancement block designed to process the image improving its quality.

10. Device according to claim 7 **characterized in that** it comprises an image orientation block intended to rotate it to a certain position in the event that the fingerprint captured by the fingerprint image capture means is not in a certain position, a block that preferably rotates by fixed angles to apply linear transformations between original pixels ($x_i$, $y_i$) and pixels of the rotated images ($x_f$, $y_f$) with fixed linear transformation parameters for each rotation, and a block which in a possible embodiment may be programmable in the number of rotations and parameters associated with rotations.

11. Device according to claim 7 **characterized in that** the label allocation block comprises:

• a filter preferably being a 3x3 Sobel with convolution masks having integers and powers of 2 for calculating the horizontal gradients ($G_x$) and the vertical gradients (Gy) of the fingerprint ridges, and
• logical OR and AND type operators, relational operators and operations of absolute value and multiplying by constant values.

12. Device according to claim 7 **characterized in that** the smoothing block is adapted to process the second image sweeping its pixels one by one and to provide the pixels of the smoothed image also one at a time, wherein the smoothing block defines a window sized SxS, wherein S can be factored as S= s1 x s2 x ... x sn, and wherein the smoothing block comprises a number of records n sub-blocks with a series-parallel hybrid architecture of which:

• a first sub-block with window size s1 x s1 is adapted to apply a smoothing function in parallel on s1 x s1 pixel labels that have been stored in the relevant records, sub-block, whose resulting label is stored one after another in a series of records;
• a second sub-block with window size (s1 x s2) x (s1 x s2) is adapted to apply a smoothing function in parallel on s2 x s2 labels previously smoothed by the first sub-block and available in the corresponding records storing the output of the first sub-block, sub-block whose resulting label is stored one after another in a series of records;
• and so on to a nth sub-block with window size (s1 x s2 x ... x sn) x (s1 x s2 x ... x sn), which again applies a smoothing function in parallel on sn x sn labels previously smoothed by the preceding sub-block and available in the relevant records storing the output of the preceding sub-block, sub-block whose output provides the pixel label in the smoothed image.

13. Device according to claim 7 **characterized in that** the convex core determination block comprises:

• a sub-block of the convex core determination block adapted to convert the second smoothed image into a tetra-directional image, preferably truncating the $\log_2 G$ bits of each pixel to 2 bits encoding labels of the tetra-directional image, and
• a sub-block of the convex core determination block adapted to locate at least one convex core point.

14. Device according to claim 7 **characterized by** further comprising an information fusion block adapted to:

• acquire a code or password,
• apply a non-reversible function (hash) to said code or password and
• combine the result of the preceding step with the fingerprint feature vector.

15. Device according to claim 7 **characterized by** further comprising the following blocks:

• an acquisition block adapted to acquire a random number, code or password and apply an error correcting code encoder to generate a secret,
• a block with XOR operators adapted to calculate and store public helper data from the fingerprint feature vector and the secret and
• an error correction code decoder block adapted to retrieve a secret from a feature vector extraction and from stored helper data of the fingerprint associated with the secret.

FIG. 1

FIG.2A

**FIG. 2B**

FIG. 2C

FIG. 2D

FIG. 3

FIG. 4

# FIG. 5

FIG. 6

FIG. 7

## INTERNATIONAL SEARCH REPORT

| International application No. |
| --- |
| PCT/ES2014/000131 |

**A. CLASSIFICATION OF SUBJECT MATTER**

*G06K9/00* (2006.01)

According to International Patent Classification (IPC) or to both national classification and IPC

**B. FIELDS SEARCHED**

Minimum documentation searched (classification system followed by classification symbols)
G06K

Documentation searched other than minimum documentation to the extent that such documents are included in the fields searched

Electronic data base consulted during the international search (name of data base and, where practicable, search terms used)

INVENES, EPODOC, WPI, TXTE, BIOSIS, COMPENDEX, EMBASE, INSPEC, XPESP, XPESP2

**C. DOCUMENTS CONSIDERED TO BE RELEVANT**

| Category* | Citation of document, with indication, where appropriate, of the relevant passages | Relevant to claim No. |
| --- | --- | --- |
| A | ARJONA, R. et al. A digital circuit for extracting singular points from fingerprint images. 18th IEEE International Conference on Electronics, Circuits, and Systems, (ICECS 2011), pages: 627 - 630, 14-12-2011, ISBN 978-1-4577-1845-8 <DOI:10.1109/ICECS.2011.6122353> | 1, 7 |
| A | ARJONA, R. et al. Model-based design for selecting fingerprint recognition algorithms for embedded systems. 19th IEEE International Conference on Electronics, Circuits and Systems (ICECS 2012) pages 579 - 582, 12-12-2012, ISBN 978-1-4673-1261-5, <DOI:10.1109/ICECS.2012.6463556> | 1, 7 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| 16/12/2014 | **(17/12/2014)** |

| Name and mailing address of the ISA/ | Authorized officer |
| --- | --- |
| OFICINA ESPAÑOLA DE PATENTES Y MARCAS Paseo de la Castellana, 75 - 28071 Madrid (España) Facsimile No.: 91 349 53 04 | A. Figuera González |
| | Telephone No. 91 3495516 |

Form PCT/ISA/210 (second sheet) (July 2009)

## INTERNATIONAL SEARCH REPORT

| International application No. |
| --- |
| PCT/ES2014/000131 |

**C (continuation).** DOCUMENTS CONSIDERED TO BE RELEVANT

| Category * | Citation of documents, with indication, where appropriate, of the relevant passages | Relevant to claim No. |
| --- | --- | --- |
| A | PORWIK, P. et al. A new approach to reference point location in fingerprint recognition. EICE Electronics Express, Vol. 1, No. 18, pages 1-7, 25-12-2004, ISSN 1349-2543 (print), <DOI: 10.1587/elex.1.575> | 1, 7 |
| A | JAIN. A. K. et al. Filterbank-based fingerprint matching. IEEE Transactions on Image Processing, Vol. 9, No. 5, pages 846 - 859, May 2005, ISSN 1057-7149 (print), <DOI:10.1109/83.841531 | 1, 7 |
| A | TICO, M. et al. Fingerprint recognition using wavelet features. IEEE International Symposium on Circuits and Systems, Conference Proceedings (ISCAS 2001), Vol. 2, pages 21 - 24, 09-05-2001, <DOI:10.1109/ISCAS.2001.920996> | 1, 7 |
| A | YANG, J. C. et al. A fingerprint verification algorithm using tessellated invariant moment features. Neurocomputing, Vol. 71, No. 10-12, pages 1939 - 1946, 01/06/2008, <DOI:0.1016/j.neucom.2007.12.034> | 1, 7 |
| A | PARK, C-H. et al. Directional filter bank-based fingerprint feature extraction and matching. IEEE Transactions on Circuits and Systems for Video Technology, Vol. 14, No. 1, pages 74 - 85, 31/12/2003, ISSN 1051-8215 (print), <DOI:10.1109/TCSVT.2003.818355> | 1, 7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102495886 A
- WO 2008135521 A2
- WO 2008098357 A1
- US 2004062426 A1
- US 2005058325 A1
- US 6185318 B
- US 6181807 B1
- WO 9532482 A1

- CN 101620677 A
- CN 102368242 A
- CN 101996318 A
- US 7136514 B1
- GB 2320352 A
- US 20080223925 A1
- US 8276816 B2